Europäisches Patentamt

European Patent Office

Office européen des brevets

(19)

(11) Veröffentlichungsnummer: **0 136 601**
**B1**

(12) **EUROPÄISCHE PATENTSCHRIFT**

(45) Veröffentlichungstag der Patentschrift:
28.01.87

(51) Int. Cl.⁴: **B 62 D 55/205,** F 16 G 15/02

(21) Anmeldenummer: **84110842.6**

(22) Anmeldetag: **12.09.84**

(54) Teilbar ausgebildetes Kettenverbindungslied für eine Raupenkette.

(30) Priorität: **16.09.83 US 533022**

(43) Veröffentlichungstag der Anmeldung:
**10.04.85 Patentblatt 85/15**

(45) Bekanntmachung des Hinweises auf die Patenterteilung:
**28.01.87 Patentblatt 87/5**

(84) Benannte Vertragsstaaten:
**DE FR GB IT**

(56) Entgegenhaltungen:
**EP - A - 0 054 879**
**DE - A - 2 844 107**
**DE - A - 3 021 325**
**US - A - 3 096 661**
**US - A - 3 427 079**

(73) Patentinhaber: **DEERE & COMPANY, 1 John Deere Road, Moline Illinois 61265 (US)**

(72) Erfinder: **Bedis, Michael, 3135 St. Anne Drive, Dubuque Iowa 52001 (US)**
Erfinder: **Braun, Carl Lee, 3052 Arbor Oaks Drive, Dubuque Iowa 52001 (US)**
Erfinder: **DeMeester, Robert John, 1075 Hiawatha Drive, East Dubuque Ollinois 61025 (US)**

(74) Vertreter: **Feldmann, Bernhard et al, DEERE & COMPANY European Office, Patent Department Steubenstrasse 36-42 Postfach 503, D-6800 Mannheim 1 (DE)**

# Beschreibung

Die Erfindung bezieht sich auf ein teilbar ausgebildetes Kettenverbindungsglied für eine Raupenkette, das mit zwei lösbar miteinander verbindbaren Gliedhälften versehen ist, die mit im zusammengebauten Zustand zumindest teilweise gegeneinander anliegenden Auflaufflächen ausgerüstet sind und von denen eine wenigstens einen Zahn mit zwei Seitenflanken und einer Zahnspitze und die andere je eine Gegenfläche für die Zahnspitze und mindestens eine Seitenflanke aufweisen, wobei im locker verbundenen Zustand der beiden Gliedhälften die Zahnspitze zu der zugehörigen Gegenfläche einen Abstand aufweist und nur eine Seitenflanke je eines Zahnes gegen die Gegenfläche anliegt.

Derartige Kettenverbindungsglieder werden bevorzugt zum Schliessen der Kette in der Montagephase oder zum Öffnen der Kette für eventuell notwendig werdende Reparaturen verwendet. Die Gliedhälften werden über Schrauben gegeneinander verspannt, so dass beim Zusammenbau Spannungen in dem Bereich am Übergang zwischen einem verzahnten Abschnitt und den sich hieran anschliessenden Auflaufflächen entstehen. Dabei wird die gesamte durch die Schrauben beim Zusammenbau aufgebrachte Klemmkraft zum Vorspannen des Kettenverbindungsgliedes führen, wodurch sich eine federnde Verbindung ergibt, die letzlich zu einem Lockern bzw. Lösen der Schrauben führen kann (US-A-3 096 661).

Die mit der Erfindung zu lösende Aufgabe wird in einer dauerhaften Verbindung der beiden Gliedhälften gesehen.

Diese Aufgabe ist nach der Erfindung dadurch gelöst worden, dass der Zahn derart angeordnet und ausgebildet ist, dass seine Zahnspitze infolge elastischer Verformung bei einer festen Verbindung der beiden Gliedhälften an der zugehörigen Gegenfläche anliegt, und dass die Auflaufflächen schräg gegenüber der Längsrichtung des Kettenverbindungsgliedes verlaufen. Auf diese Weise ist ein Kettenverbindungsglied geschaffen worden, das eine sich im Einsatz nicht lösende feste Verbindung der beiden Gliedhälften aufweist, da die Seitenflanke des oder der Zähne beim anfänglichen Anziehen der Schrauben und dem damit gleichzeitig erfolgenden Verspannen des Kettenverbindungsgliedes gegen die zugehörigen Gegenflächen gepresst werden, wobei beim nachfolgenden festen Anziehen der Schrauben die Zahnspitze oder -spitzen gegen ihre zugehörigen Gegenflächen zur Anlage kommen und dabei mit der gesamten Klemmkraft belastet werden.

Für ein Kettenverbindungsglied mit mehreren Zähnen, deren Zahnspitzen Zahnfüsse gegenüberstehen, wird nach der Erfindung vorgeschlagen, dass die Zahnspitzen in den Zahnfüssen anliegen, wenn bis etwa 60% der Klemmkraft aufgewendet wird. Damit können erfindungsgemäss bis zu etwa 60% der Klemmkraft zum Verspannen des Kettenverbindungsgliedes aufgewendet werden, während die verbleibende Klemmkraft dazu verwendet wird, die Zahnspitzen mit den Zahnfüssen gegeneinander zu pressen.

Zweckmässig können die Zahnspitzen in den Zahnfüssen anliegen, wenn 20% bis 30% der Klemmkraft aufgewendet wird.

Vorteilhaft kann im fest verbundenen Zustand der beiden Gliedhälften eine weitere Seitenflanke der Zähne einer Gliedhälfte Abstand zu der änderen Gliedhälfte aufweisen.

In der Zeichnung ist ein nachfolgend näher erläutertes Ausführungsbeispiel der Erfindung dargestellt. Es zeigt:

Fig. 1 ein Kettenverbindungsglied in Seitenansicht mit noch nicht fest miteinander verschraubten Gliedhälften und

Fig. 2 eine ähnliche Darstellung wie in Fig. 1, jedoch mit fest miteinander verschraubten Gliedhälften.

In der Zeichnung ist mit 10 ein Kettenverbindungsglied bezeichnet, das in der Regel dazu dient, die beiden freien Enden einer nicht dargestellten Gleiskette in der Montagephase auf einem Raupenfahrzeug miteinander zu verbinden bzw. ein Öffnen der Gleiskette für eventuell notwendige Reparaturen zu ermöglichen. Derartige Kettenverbindungsglieder sind teilbar ausgebildet und bestehen aus einer ersten und einer zweiten Gliedhälfte 12 und 14, die nach dem Zusammenbau ein einziges Kettenverbindungsglied bilden. Dabei ist in der Gliedhälfte 12 eine sogenannte Bolzenbohrung 16 und in der Gliedhälfte 14 eine sogenannte Hülsenbohrung 18 vorgesehen, wobei eine die Mittelpunkte der beiden Bohrungen 16 und 18 miteinander verbindende Linie mit 20 bezeichnet ist. Die Gliedhälften 12 und 14 haben überlappende Teile, die zwischen den Bohrungen 16 und 18 vorgesehen sind und die entlang einer Trennaht 22 miteinander verbunden werden. An der Aussenseite des Verbindungsgliedes 10 ist ein Kettenschuh 24 mittels zweier Schrauben 26 aufgeschraubt. Diese erstrecken sich durch den Kettenschuh 24 nach unten in das Kettenverbindungsglied 10 durch die Gliedhälfte 14 bis in die Gliedhälfte 12.

Die Trennaht 22 besteht aus gegenüberliegenden an den Gliedhälften 12 und 14 vorgesehenen Flächen. Im einzelnen ist die Gliedhälfte 12 teilweise mit einer verzahnten Oberfläche versehen, die dort aus mehreren Zähnen 30 besteht. Diese liegen auf der Linie 20 etwa mittig zwischen den beiden Bohrungen 16 und 18, wobei die Länge der verzahnten Oberfläche etwa ein Drittel des Abstandes zwischen den Mitten der Bohrungen 16 und 18 beträgt. Die Gliedhälfte 14 weist eine ähnliche verzahnte Oberfläche auf, die aus Zähnen 32 gebildet ist.

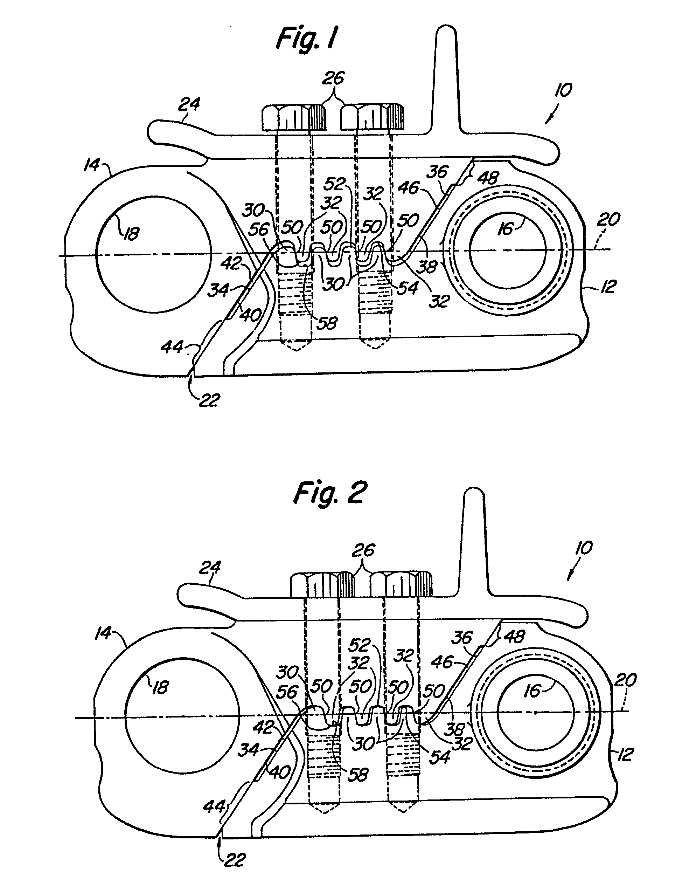

An die linke Seite der aus den Zähnen 30 gebildeten verzahnten Oberfläche schliesst sich eine abgestufte schräge Auflauffläche 34 an, während eine glatte schräge Auflauffläche 36 die rechte Seite der verzahnten Oberfläche fortsetzt. In ähnlicher Weise bildet eine abgestufte schräge Auflauffläche 38 die rechte Fortsetzung der durch die Zähne 32 gebildeten verzahnten Oberfläche, wobei eine glatte schräge Auflauffläche 40 die linke Seite der verzahnten Oberfläche fortsetzt. Die abgestufte Auflauffläche 34 und die glatte Auflauffläche 40 liegen sich gegenüber und bilden zwischer sich im abgestuften Bereich einen Entlastungsbereich 42, der sich von den Zähnen 30 und 32 in Richtung auf die Innenseite des Kettenverbindungsgliedes 10 über eine Strecke erstreckt, die in etwa drei Viertel der Länge der glatten Auflauffläche 40 beträgt. Im nicht abgestuften Bereich liegt die abgestufte Auflauffläche 34 gegen das verbleibende Viertel der glatten Auflauffläche 40 an. Die somit entstehenden Anlageflächen wirken zusammen und bilden eine innere Lagerfläche 44. In ähnlicher Weise liegt die äussere glatte Auflauffläche 36 der abgestuften Auflauffläche 38 gegenüber, so dass auch dort ein Entlastungsbereich 46 und eine Lagerfläche 48 entsteht. Die Entlastungsbereiche 42 und 46 können aber auch kürzer ausgebildet sein. Die Zähne 30 und 32 sind mit entsprechenden linken und rechten Flankenseiten versehen, die an Stellen 50 gegeneinander anliegen. Die Zähne 30 und 32 sind dabei in bezug aufeinander derart angeordnet, dass, wenn die Gliedhälften 12 und 14 — wie in Fig. 1 dargestellt — noch nicht fest miteinander verschraubt sind, die sich gegenüberstehenden Flankenseiten treffen, bevor Spitzen 52 der Zähne 30 in gegenüberstehende Zahnfüsse 54 der Zähne 32 und bevor Spitzen 56 der Zähne 32 in gegenüberstehende Zahnfüsse 58 der Zähne 30 eintreten, wobei zwischen den anderen Flankenseiten ein Abstand verbleibt.

Sobald nun die volle Schraubkraft aufgewendet wird, wird das Kettenverbindungsglied 10 sich elastisch verformen infolge der Keilwirkung, die auf die Flankenseiten an den Stellen 50 durch die Auflaufflächen 36 und 40 an den Lagerflächen 44 und 48 ausgeübt wird. Auf diese Weise ist das Kettenverbindungsglied 10 vorgespannt. Gleichfalls wird beim festen Anziehen der Schrauben jeder Zahn infolge der Keilkraft ausgebogen, wobei beim Ausbiegen die Zahnspitzen 52 und 56 sich in Richtung auf die Zahnfüsse 54 und 58 bewegen. Bei der dargestellten Ausführung, werden die Zahnspitzen gegen die Zahnfüsse anliegen, wenn 20 bis 30% der gewünschten Klemmkraft aufgewendet wurden. Zu diesem Zeitpunkt ist die gesamte Verspannung des Kettenverbindungsgliedes 10 erreicht. Der anfängliche Abstandswert zwischen den Zahnspitzen und den Zahnfüssen richtet sich nach dem optimalen Verspannungswert, der für optimale Dauerfestigkeit erforderlich ist. Die verbleibenden 70 bis 80% der Klemmkraft werden aufgewendet, nachdem die Zähne bzw. ihre Spitzen anliegen. Sie werden dann unmittelbar von den Zahnspitzen auf die Zahnfüsse der ineinandergreifenden Gliedhälften übertragen. Diese direkte Übertragung resultiert in einer sehr soliden Verbindung, lässt eine angemessene Schraubenspannung zu und wirkt der Gefahr der Lockerung beträchtlich entgegen.

Auch bei Kettenverbindungsgliedern, deren Verzahnung von der vorstehend erläuterten und dargestellten abweicht, kann das erfindungsgemässe Prinzip vom Aufliegen der Zähne durch Anwendung einer Klemmkraft zum angemessenen Verspannen des Kettenverbindungsgliedes Anwendung finden, selbst dann, wenn bis zu 60% der gesamten Klemmkraft zum Verspannen aufgewendet wurden und der verbleibende Rest zum Anpressen.

## Patentansprüche

1. Teilbar ausgebildetes Kettenverbindungsglied für eine Raupenkette, das mit zwei lösbar miteinander verbindbaren Gliedhälften versehen ist, die mit im zusammengebauten Zustand zumindest teilweise gegeneinander anliegenden Auflaufflächen (34 bis 40) ausgerüstet sind, und von denen eine wenigstens einen Zahn (30 oder 32) mit zwei Seitenflanken und einer Zahnspitze (52 oder 56) und die andere je eine Gegenfläche für die Zahnspitze und mindestens eine Seitenflanke aufweisen, wobei im locker verbundenen Zustand der beiden Gliedhälften die Zahnspitze (52 oder 56) zu der zugehörigen Gegenfläche einen Abstand aufweist und nur eine Seitenflanke je eines Zahnes gegen die Gegenfläche anliegt, dadurch gekennzeichnet, dass der Zahn (30 oder 32) derart angeordnet und ausgebildet ist, dass seine Zahnspitze (52 oder 56) infolge elastischer Verformung bei einer festen Verbindung der beiden Gliedhälften (12, 14) an der zugehörigen Gegenfläche anliegt, und dass die Auflaufflächen (34 bis 40) schräg gegenüber der Längsrichtung des Kettenverbindungsgliedes verlaufen.

2. Kettenverbindungsglied nach Anspruch 1 mit mehreren Zähnen (30 oder 32), deren Zahnspitzen (52 oder 56) Zahnfüssen (54 oder 58) gegenüberstehen, dadurch gekennzeichnet, dass die Zahnspitzen (52 oder 56) in den Zahnfüssen (54 oder 58) anliegen, wenn bis etwa 60% der Klemmkraft aufgewendet wird.

3. Kettenverbindungsglied nach Anspruch 2, dadurch gekennzeichnet, dass die Zahnspitzen (52 oder 56) in den Zahnfüssen anliegen, wenn 20 bis 30% der Klemmkraft aufgewendet wird.

4. Kettenverbindungsglied nach einem oder mehreren der vorherigen Ansprüche, dadurch gekennzeichnet, dass im fest verbundenen Zustand der beiden Gliedhälften (12, 14) eine weitere Seitenflanke der Zähne (30, 32) einer Gliedhälfte (12 oder 14) Abstand zu der anderen Gliedhälfte (14 oder 12) aufweist.

## Claims

1. Disassemblable track connecting link for a track, the link being provided with two releasably interconnectable halves equipped with rising surfaces (34 to 40) bearing at least partially against one another in the assembled state and one of which halves has at least one tooth (30 or 32) with two lateral flanks and a tooth tip (52 or 56), while the other has a counter surface in each case for the tooth tip and at least one lateral flank, the tooth tip (52 or 56) being at a distance from the associated counter surface in the loosely connected state of the two link halves and only one lateral flank of each tooth bearing against the counter surface, characterised in that the tooth (30 or 32) is so arranged and formed that its tip (52 or 56) bears against the associated counter surface in consequence of elastic deformation when the two link halves (12, 14) are tightly connected, and the rising surfaces (34 to 40) extend obliquely with respect to the longitudinal direction of the track connectind link.

2. Track connecting link according to claim 1 having a plurality of teeth (30 or 32) whose tips (52 or 56) are disposed opposite tooth roots (54 or 58), characterised in that the tooth tips (52 or 56) bear against the tooth roots (54 or 58) when up to about 60% of the clamping force is applied.

3. Track connecting link according to claim 2, characterised in that the tooth tips (52 or 56) bear against the tooth roots when 20 to 30% of the clamping force is applied.

4. Track connecting link according to one or more of the preceding claims, characterised in that in the tightly connected state of the two link halves (12, 14) another lateral flank of the teeth (30, 32) of one link half (12 or 14) is at a distance from the other link half (14 or 12).

## Revendications

1. Maillot de raccordement de chaîne en parties séparables pour chenille, comportant deux moitiés de maillon pouvant être reliées de façon amovible l'une à l'autre, comprenant des surfaces d'attaque (34 à 40) qui, à l'état assemblé, s'appliquent au moins partiellement l'une contre l'autre, et parmi lesquelles l'une présente au moins une dent (30 ou 32) munie de deux flancs et d'une crête (52 ou 56), et l'autre comporte une surface complémentaire pour chaque crête et au moins un flanc, la crête de dent (52 ou 56) étant, dans l'état de liaison lâche des deux moitiés de maillon, à une certaine distance de la surface complémentaire correspondante et un seul flanc de chaque dent respective d'appuyant contre la surface complémentaire caractérisé en ce que la dent (30 ou 32) est disposée et agencée de façon que sa crête (52 ou 56) s'appuie par suite de déformation élastique, dans un état de liaison rigide des deux moitiés de maillon (12, 14), contre la surface complémentaire correspondante, et en ce que les surfaces d'attaque (34 à 40) sont obliques par rapport à la direction longitudinale du maillon de raccordement de chaîne.

2. Maillon de raccordement pour chaîne suivant la revendication 1, comportant plusieurs dents (30 ou 32) dont les crêtes (52 ou 56) sont en face d'entredents (54 ou 58), caractérisé en ce que les crêtes (52 ou 56) des dents s'appliquent dans les entredents (54 ou 58) quand on exerce jusqu'à 60% environ de l'effort de serrage.

3. Maillon de raccordement de chaîne suivant la revendication 2, caractérisé en ce que les crêtes (52 ou 56) des dents s'appliquent dans les entredents quand on exerce 20 à 30% de l'effort de serrage.

4. Maillon de raccordement de chaîne suivant une ou plusieurs des revendications précédentes, caractérisé en ce que, dans l'état de liaison de solidarisation des deux moitiés de maillon (12, 14), un autre flanc des dents (30, 32) d'une moitié de maillon (12 ou 14) se trouve écarté de l'autre moitié de maillon (14 ou 12).

Fig. 1

Fig. 2

5